# EUROPÄISCHE PATENTSCHRIFT

(11) **EP 2 756 491 B1**
(45) Veröffentlichungstag und Bekanntmachung des Hinweises auf die Patenterteilung: **27.05.2015**
(21) Anmeldenummer: 12741281.5
(22) Anmeldetag: 18.07.2012
(51) Int. Cl.: G08G 1/0968, G08G 1/0967, H04L 12/58

(54) **VERFAHREN UND VORRICHTUNG ZUM BESTIMMEN EINER FAHREMPFEHLUNG FÜR EIN FAHRZEUG SOWIE VERFAHREN UND VORRICHTUNG ZUM BEREITSTELLEN EINER FAHREMPFEHLUNG FÜR EIN FAHRZEUG**
METHOD AND DEVICE FOR DETERMINING A ROUTE RECOMMENDATION FOR A VEHICLE AND METHOD AND DEVICE FOR PROVIDING A ROUTE RECOMMENDATION FOR A VEHICLE
PROCÉDÉ ET DISPOSITIF DE DÉTERMINATION D'UNE RECOMMANDATION DE CONDUITE POUR UN VÉHICULE AINSI QUE PROCÉDÉ ET DISPOSITIF POUR PRODUIRE UNE RECOMMANDATION DE CONDUITE POUR UN VÉHICULE

(30) Priorität: 14.09.2011 DE 102011082678
(43) Veröffentlichungstag der Anmeldung: 23.07.2014
(73) Patentinhaber: Robert Bosch GmbH, 70442 Stuttgart (DE)
(72) Erfinder: HOLT, Bjoern Von, 31199 Diekholzen (DE)
(86) Internationale Anmeldenummer: PCT/EP2012/064101
(87) Internationale Veröffentlichungsnummer: WO 2013/037547

(56) Entgegenhaltungen:
- DE-T5-112009 000 070
- US-A1- 2007 088 494
- US-A1- 2009 187 300
- US-A1- 2009 204 600
- US-A1- 2010 082 241

## Beschreibung

Die vorliegende Erfindung bezieht sich auf ein Verfahren und eine Vorrichtung zum Bestimmen einer Fahrempfehlung für ein Fahrzeug, ein Verfahren und eine Vorrichtung zum Bereitstellen einer Fahrempfehlung für ein Fahrzeug, sowie ein Cömputerprogrammprodukt gemäß den Hauptansprüchen.

### Stand der Technik

Navigationsgeräte für Fahrzeuge verarbeiten unter anderem auch Stauwarnungen und andere Verkehrsmeldungen beispielsweise mittels RDS-Funktionen oder dergleichen. Social-Media-Plattformen, wie Facebook oder Twitter, haben in kurzer Zeit weite Verbreitung unter Nutzern erfahren. Mehrere Automobilfirmen haben diesen Trend bereits aufgegriffen, um Kunden durch Bereitstellen von Fanportalen auf solchen Social-Media-Plattformen an sich zu binden. Diese Fanseiten werden beispielsweise in starkem Umfang für die Kommunikation zwischen den Fans genutzt. Die Fanseiten ermöglichen auch das Einstellen von Beiträgen der Fans bzw. Kunden.

Die DE 11 2009 000 070 T5 offenbart Systeme und Verfahren zum Bereitstellen einer Navigationsunterstützung unter Verwendung eines sozialen Online-Netzwerks.

Die US 2007/088494 A1 offenbart ein System und Verfahren zum Ermöglichen einer drahtlosen Verkehrsmitteilungsübertragung.

Vor diesem Hintergrund werden mit der vorliegenden Erfindung ein Verfahren zum Bestimmen einer Fahrempfehlung für ein Fahrzeug, ein Verfahren zum Be reitstellen einer Fahrempfehlung für ein Fahrzeug, weiterhin eine Vorrichtung zur Ausführung der Verfahren, sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zum Bestimmen einer Fahrempfehlung für ein Fahrzeug, wobei das Verfahren unter Verwendung einer Social-Media-Internetplattform und eines in dem Fahrzeug angeordneten und mit der Social-Media-Internetplattform drahtlos verbundenen, internetfähigen Navigationsgerätes ausgeführt wird, wobei das Verfahren folgende Schritte aufweist:
Empfangen einer Verkehrsereignisinformation und einer der Verkehrsereignisinformation zugeordneten Positionsinformation von der Social-Media-Internetplattform mittels des Navigationsgeräts;
Vergleichen der Positionsinformation mit einer Routeninformation, die eine von dem Fahrzeug zu befahrende Route repräsentiert, mittels des Navigationsgeräts, um zu ermitteln, ob eine von der Positionsinformation repräsentierte Position auf der von dem Fahrzeug zu befahrenden Route liegt; und
Auswerten der Verkehrsereignisinformation, wenn die von der Positionsinformation repräsentierte Position auf einer von dem Fahrzeug zu befahrenden Route liegt, um die Fahrempfehlung für das Fahrzeug basierend auf der Verkehrsereignisinformation zu bestimmen.

Unter einem Fahrzeug kann hierbei ein Kraftfahrzeug, insbesondere ein Straßenfahrzeug, verstanden werden, wie beispielsweise ein Personenkraftwagen, ein Lastkraftwagen oder ein sonstiges Nutzfahrzeug. Das Navigationsgerät ermöglicht mit Hilfe von Positionsbestimmung und gespeicherten Geoinformationen eine Zielführung zu einem gewählten Ort über eine Route unter Beachtung gewünschter Kriterien und Vorgaben. Die mittels des Navigationsgeräts erstellbare Route ist durch die Routeninformation repräsentiert. Zusätzlich zu dieser Navigationsfunktion kann das Navigationsgerät eine Kommunikationsfunktion bieten. Alternativ kann das Navigationsgerät auch über eine Schnittstelle mit einer Kommunikationseinrichtung verbunden sein, welche die Kommunikationsfunktion bietet. Die Kommunikationsfunktion ermöglicht, dass das Navigationsgerät über eine drahtlose Verbindung mit dem Internet verbunden ist. Insbesondere kann es sich bei dem Navigationsgerät um ein fest in ein Fahrzeug eingebautes oder abnehmbar in dem Fahrzeug angeordnetes, mobiles Navigationsgerät handeln, wie beispielsweise ein internetfähiges Mobiltelefon mit Navigationsfunktion. Bei der Social-Media-Internetplattform handelt es sich um einen internetbasierten Dienst aus dem Bereich sozialer Medien. Eine solche Social-Media-Internetplattform ermöglicht eine Veröffentlichung, einen Austausch und eine Bearbeitung von digitalen Inhalten bzw. Informationen durch die einzelnen Nutzer der Social-Media-Internetplattform oder gemeinsam durch mehrere Nutzer der Social-Media-Internetplattform. Dazu kann das Navigationsgerät oder die Kommunikationseinrichtung, die dem Navigationsgerät zugeordnet ist, ausgebildet sein, um einen Zugang zu der Social-Media-Internetplattform bereitzustellen. Die Verkehrsereignisinformation kann ein Verkehrsereignis repräsentieren, wie beispielsweise Angaben zum Verkehrsfluss oder dergleichen. Die Verkehrsereignisinformation kann in Gestalt eines Signals von dem Navigationsgerät bzw. der dem Navigationsgerät zugeordneten Kommunikationseinrichtung empfangen und von dem Navigationsgerät eingelesen werden. Die Positionsinformation repräsentiert eine geographische Position, die dem Verkehrsereignis bzw. der Verkehrsereignisinformation zugeordnet ist. Insbesondere kann die Positionsinformation von dem Navigationsgerät interpretierbare Koordinaten repräsentieren. Die Positionsinformation kann in Gestalt eines Signals von dem Navigationsgerät bzw. der dem Navigationsgerät zugeordneten Kommunikationseinrichtung empfangen und von dem Navigationsgerät eingelesen werden. Auch kann der Verkehrsereignisinformation ein Zeitstempel zugeordnet sein. Somit sind aus der Verkehrsereignisinformation, der Positionsinformation und gegebenenfalls dem Zeitstempel Art, Ort und gegebenenfalls Zeit eines Verkehrsereignisses ableitbar. Bei dem Schritt des Vergleichens kann es sich um eine mathematische und/oder logische Verknüpfung von Signalen, beispielsweise unter Verwendung der Grundrechenarten, um eine Verwendung einer Nachschlagtabelle, um eine statistische Auswertung o. ä. handeln. Im Schritt des Vergleichens kann auch ein definierbarer Toleranzbereich für eine Abweichung der von der Positionsinformation repräsentierten Position von auf der von dem Fahrzeug zu befahrenden Route berücksichtigt werden. Bei dem Schritt des Auswertens wird mittels geeigneter Algorithmen bzw. Einrichtungen und gemäß vordefinierten Regeln von der Verkehrsereignisinformation auf die Fahrempfehlung geschlossen. Dabei kann die Verkehrsereignisinformation je nach repräsentiertem Verkehrsereignis vorgabemäßig und/oder dynamisch mit der Routeninformation kombiniert werden, um die Fahrempfehlung zu bestimmen. In der Fahrempfehlung kann somit das Verkehrsereignis, das durch die Verkehrsereignisinformation repräsentiert ist, berücksichtigt sein. Der Schritt des Auswertens kann übersprungen bzw. weggelassen werden, wenn die von der Positionsinformation repräsentierte Position nicht auf einer von dem Fahrzeug zu befahrenden Route liegt.

Die vorliegende Erfindung schafft ferner ein Verfahren zum Bereitstellen einer Fahrempfehlung für ein Fahrzeug, wobei das Verfahren unter Verwendung einer Social-Media-Internetplattform und eines in einem Fahrzeug angeordneten und mit der Social-Media-Internetplattform drahtlos verbundenen, internetfähigen Navigationsgerätes ausgeführt wird, wobei das Verfahren folgende Schritte aufweist:
Einlesen einer Verkehrsereignisinformation basierend auf einer Benutzereingabe mittels des Navigationsgerätes; und
Aussenden der Verkehrsereignisinformation und einer der Verkehrsereignisinformation zugeordneten Positionsinformation, die eine Position des Fahrzeugs zu einem Zeitpunkt des Einlesens der Verkehrsereignisinformation repräsentiert, mittels des Navigationsgerätes an die Social-Media-Internetplattform, um die Fahrempfehlung bereitzustellen.

Die Benutzereingabe kann ein Benutzereingabesignal von einer dem Navigationsgerät zugeordneten Benutzerschnittstelle bewirken. Bei der Benutzerschnittstelle kann es sich um einen Berührungsbildschirm, ein Tastenfeld oder dergleichen handeln. Basierend auf dem Benutzereingabesignal bzw. der Benutzereingabe kann im Schritt des Einlesens mittels geeigneter Algorithmen bzw. Einrichtungen, Nachschlagtabellen, etc. und gemäß vordefinierten Regeln die Verkehrsereignisinformation generiert werden. Im Schritt des Einlesens oder im Schritt des Aussendens kann die Verkehrsereignisinformation mit der Positionsinformation versehen werden. Ferner kann die Verkehrsereignisinformation im Schritt des Einlesens oder im Schritt des Aussendens mit einem Zeitstempel versehen werden.

Die vorliegende Erfindung schafft ferner eine Vorrichtung, die Einrichtungen zur Durchführung eines der oben genannten Verfahren aufweist.

Somit schafft die vorliegende Erfindung eine Vorrichtung, die ausgebildet ist, um die Schritte eines der oben genannten Verfahren durchzuführen bzw. umzusetzen. Insbesondere kann die Vorrichtung Einrichtungen aufweisen, die ausgebildet sind, um die (beispielsweise je einen der) Schritte eines der Verfahren auszuführen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches oder elektronisches Gerät verstanden werden, das ausgebildet ist, um eine Fahrempfehlung für ein Fahrzeug zu bestimmen und/oder eine Fahrempfehlung für Fahrzeuge bereitzustellen. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger, wie einem Halbleiterspeicher, einem Festplattenspeicher oder einem optischen Speicher, gespeichert ist und zur Durchführung eines der oben genannten Verfahren verwendet wird, wenn das Programm auf einer Vorrichtung ausgeführt wird.

Die Erfindung basiert auf der Erkenntnis, dass Meldungen bezüglich Verkehrsereignissen, wie beispielsweise Stauwarnungen, mittels internetfähiger Navigationsgeräte durch Einbindung von Social-Media-Plattformen bereitgestellt und/oder verbreitet bzw. empfangen werden können. Insbesondere wird dabei ein von Nutzern der Social-Media-Plattform auf derselben bereitgestellter verkehrsrelevanter Inhalt in Gestalt der Verkehrsereignisinformationen wiederum Nutzern der Social-Media-Plattform zur Verfügung gestellt, um Fahrempfehlungen zu generieren.

Die Vorteile der Erfindung bestehen darin, dass durch die auf der Verkehrsereignisinformation basierenden Fahrempfehlung eine Genauigkeit, Aktualität und Aussagekraft von Verkehrsmeldungen verbessert werden kann. Beispielsweise können die Verkehrsereignisinformationen in Echtzeit oder beinahe in Echtzeit zur Verfügung stehen. Somit kann seitens eines Fahrzeuglenkers aufgrund der Fahrempfehlung schnell auf ein Verkehrsereignis reagiert werden. In Verbindung mit der Fahrempfehlung können herkömmliche Verkehrsmeldungen aussagefähiger gemacht werden, um beispielsweise eine Entscheidung zur Annahme einer auf herkömmliche Weise vorgeschlagenen Umleitung zu erleichtern. Auch können anderweitige aktuelle Zusatzinformationen, wie z. B. Informationen über mobile Radarfallen oder dergleichen, die beispielsweise nur von einigen Radiosendern über normalen Rundfunk verbreitet werden, über die Internetplattform erhalten werden.

Insbesondere kann im Schritt des Empfangens oder im Schritt des Einlesens die Verkehrsereignisinformation ein Verkehrsereignis aus einer vordefinierten Liste von Verkehrsereignissen repräsentieren. Somit kann jedem von einer Anzahl von vordefinierten Verkehrsereignissen ein eindeutiger Identifizierer zugeordnet sein. Der Identifizierer wiederum kann seitens des Navigationsgerätes mit vorbestimmten Metriken, Gewichtungen oder dergleichen verknüpft sein, welche ausgewertet werden können oder auf die Routeninformation angewandt werden können, um die Fahrempfehlung zu bestimmen oder bereitzustellen. Bei der Bereitstellung der Fahrempfehlung kann einem Benutzer des Navigationsgerätes die vordefinierte Liste von Verkehrsereignissen angezeigt bzw. mitgeteilt werden. Die Benutzereingabe repräsentiert somit eine Auswahlhandlung aus der Liste. Somit kann im Schritt des Einlesens die Verkehrsereignisinformation automatisch basierend auf der Auswahl aus der Liste von Verkehrsereignissen erzeugt werden. Dann kann im Schritt des Aussendens die Verkehrsereignisinformation in Gestalt einer automatisch generierten Nachricht in einem standardisierten Format an die Internetplattform ausgegeben werden. Bei der Bestimmung der Fahrempfehlung kann im Schritt des Empfangens mittels geeigneter Einrichtungen des Navigationsgeräts, wie beispielsweise Nachschlagtabellen oder dergleichen, das konkrete Verkehrsereignis, sowie gegebenenfalls zugeordnete Einflussfaktoren zum Bestimmen der Fahrempfehlung basierend auf der Verkehrsereignisinformation identifiziert und/oder extrahiert werden. Eine solche Ausführungsform bietet den Vorteil, dass die Bereitstellung bzw. die Bestimmung der Fahrempfehlung durch die Verwendung der vordefinierten Liste von Verkehrsereignissen sehr vereinfacht wird. Zur Bereitstellung der Fahrempfehlung genügt seitens eines Benutzers lediglich eine Auswahlhandlung aus der vordefinierten Liste. Bei der Bestimmung der Fahrempfehlung erleichtert die Standardisierung der Verkehrsereignisse mittels der vordefinierten Liste die korrekte Identifizierung des konkreten Verkehrsereignisses und verbessert somit die Genauigkeit der Fahrempfehlung.

Gemäß einer Ausführungsform, bei der die Social-Media-Internetplattform zumindest eine Benutzergruppe aufweist, wobei das Navigationsgerät ein Teilnehmergerät eines Mitgliedes der zumindest einen Benutzergruppe der Social-Media-Internetplattform ist, können im Schritt des Empfangens die Verkehrsereignisinformation und die Positionsinformation mittels des Navigationsgeräts von Mitgliedern der zumindest einen Benutzergruppe der Social-Media-Internetplattform empfangen werden oder können im Schritt des Aussendens die Verkehrsereignisinformation und die Positionsinformation mittels des Navigationsgerätes an Mitglieder der zumindest einen Benutzergruppe der Social-Media-Internetplattform ausgesendet werden. Die Benutzergruppe kann innerhalb der Social-Media-Internetplattform beispielsweise in Gestalt einer geschlossenen Benutzergruppe ausgestaltet sein. Benutzer oder Mitglieder können über ein Benutzerkonto verfügen, über welches sich ein Benutzer als tatsächliches Mitglied der Benutzergruppe identifizieren kann. Das internetfähige Navigationsgerät, das beispielsweise über eine Anmeldefunktionalität an der Social-Media-Internetplattform verfügt, kann während eines Zielführungsvorganges an der Social-Media-Internetplattform angemeldet sein. Somit ist das Navigationsgerät ein Teilnehmergerät der Benutzergruppe. Bei der Benutzergruppe kann es sich um ein Profil bzw. (Gruppen-) Account innerhalb der Social-Media-Internetplattform handeln. Von der Benutzergruppe aus können Informationen an die Teilnehmer bzw. Teilnehmergeräte der Benutzergruppe gesendet werden. Auch können Teilnehmer bzw. Teilnehmergeräte der Benutzergruppe Informationen an die Benutzergruppe senden. Somit können Informationen innerhalb der Benutzergruppe verteilt werden. Insbesondere kann es sich bei der Benutzergruppe auch um eine spezifische Fanseite eines Automobilherstellers oder dergleichen handeln. Eine solche Ausführungsform bietet den Vorteil, dass die Fahrempfehlung auf unkomplizierte Weise bereitgestellt oder bestimmt werden kann. Eine Verteilung der Fahrempfehlung an eine Mehrzahl von Navigationsgeräten oder eine Bestimmung der Fahrempfehlung aus Verkehrsereignisinformationen von einer Mehrzahl von Navigationsgeräten wird somit erleichtert.

Gemäß einer Ausführungsform, bei der die Social-Media-Internetplattform zumindest eine Benutzergruppe aufweist, wobei das Navigationsgerät ein Teilnehmergerät eines Mitgliedes der zumindest einen Benutzergruppe der Social-Media-Internetplattform ist, wobei zumindest ein weiteres Navigationsgerät zumindest eines weiteren Fahrzeugs ein Teilnehmergerät eines weiteren Mitgliedes der zumindest einen Benutzergruppe der Social-Media-Internetplattform ist, können im Schritt des Empfangens zumindest eine Verkehrsereignisinformation und eine der zumindest einen Verkehrsereignisinformation zugeordnete Positionsinformation, die von dem zumindest einen weiteren Navigationsgerät des weiteren Mitgliedes der einen Benutzergruppe stammen, mittels des Navigationsgeräts von dem Mitglied der zumindest einen Benutzergruppe der Social-Media-Internetplattform empfangen werden oder können im Schritt des Aussendens die Verkehrsereignisinformation und die Positionsinformation mittels des Navigationsgerätes an das weitere Mitglied der zumindest einen Benutzergruppe der Social-Media-Internetplattform ausgesendet werden, wobei die Verkehrsereignisinformation und die Positionsinformation für das zumindest eine weitere Navigationsgerät der zumindest einen Benutzergruppe empfangbar sind. Eine solche Ausführungsform bietet den Vorteil, dass die Fahrempfehlung auf unkomplizierte Weise bereitgestellt oder bestimmt werden kann. Eine Verteilung der Fahrempfehlung an eine Mehrzahl von Navigationsgeräte oder eine Bestimmung der Fahrempfehlung aus Verkehrsereignisinformationen von einer Mehrzahl von Navigationsgeräten wird somit erleichtert.

Auch kann ein Schritt des Überprüfens der Verkehrsereignisinformation und der Positionsinformation auf Plausibilität unter Verwendung von Fahrtdaten des Fahrzeugs, Verkehrsinformationen oder einer Anzahl von gleichen oder inhaltlich verwandten Verkehrsereignisinformationen mit innerhalb eines Toleranzbereichs gleichen Positionsinformationen vorgesehen sein. Dabei kann das Navigationssystem Fahrtdaten, wie beispielsweise Positionsinformationen, Geschwindigkeitsinformationen und/oder Fahrtrichtungsinformationen, aus Satellitensignalen oder dergleichen ermitteln. Eine Positionsinformation, eine Geschwindigkeitsinformation und/oder eine Fahrtrichtungsinformation können hierbei Fahrtdaten repräsentieren. Die Verkehrsinformationen können Meldungen von herkömmlichen Verkehrsmeldesystemen, wie beispielsweise RDS, TMC oder dergleichen umfassen. Bei der Bestimmung der Fahrempfehlung können mehrere Verkehrsereignisinformationen empfangen werden. Eine möglichst weitgehende örtliche und gegebenenfalls zeitliche Übereinstimmung von möglichst übereinstimmenden Verkehrsereignissen, die durch die Verkehrsereignisinformationen repräsentiert sind, kann ebenfalls eine Aussage hinsichtlich der Plausibilität ermöglichen. Der Schritt des Überprüfens kann bei der Bereitstellung der Fahrempfehlung vor dem Schritt des Aussendens oder bei der Bestimmung der Fahrempfehlung vor dem Schritt des Auswertens durchgeführt werden. Dabei kann der Verkehrsereignisinformation bzw. der Fahrempfehlung auch ein Plausibilitätswert zugeordnet werden. Eine solche Ausführungsform bietet den Vorteil, dass eine Verkehrsereignisinformation bzw. eine Fahrempfehlung einer inhaltlichen Prüfung unterzogen werden kann, so dass Aussagekraft und Korrektheit der Verkehrsereignisinformation bzw. der Fahrempfehlung verbessert werden können.

Zudem kann ein Schritt des Verwerfens der Verkehrsereignisinformation vorgesehen sein, wenn im Schritt des Überprüfens keine Plausibilität der Verkehrsereignisinformation und der Positionsinformation festgestellt wird. Der Schritt des Verwerfens kann bei der Bereitstellung der Fahrempfehlung vor dem Schritt des Aussendens oder bei der Bestimmung der Fahrempfehlung vor dem Schritt des Auswertens durchgeführt werden. Dann kann der Schritt des Aussendens oder der Schritt des Auswertens übersprungen oder unterdrückt werden. Insbesondere kann somit der Schritt des Verwerfens durchgeführt werden, wenn sich im Schritt des Überprüfens ein Widerspruch zwischen der Verkehrsereignisinformation und Fahrtdaten, Verkehrsinformationen aus anderen Quellen oder den mehreren Verkehrsereignisinformationen, und somit keine Plausibilität ergeben hat. Beispielsweise kann zumindest eine der mehreren Verkehrsereignisinformationen ein widersprüchliches Verkehrsereignis repräsentieren. Eine solche Ausführungsform bietet den Vorteil, dass eine Bereitstellung oder Bestimmung einer irrtümlichen, versehentlich oder absichtlich fälschlichen Fahrempfehlung bzw. Verkehrsereignisinformation wirksam verhindert werden kann.

Ferner kann im Zusammenhang mit der Bestimmung der Fahrempfehlung ein Schritt des Modifizierens einer mittels des Navigationsgerätes bestimmten, bestehenden Route basierend auf der Fahrempfehlung vorgesehen sein, um eine modifizierte Route zu erzeugen. Dabei kann auch ein Schritt des Ausgebens der modifizierten Route an eine Benutzerschnittstelle des Navigationsgerätes vorgesehen sein. Die modifizierte Route kann beispielsweise eine Umleitung beinhalten, welche aufgrund der Fahrempfehlung empfohlen oder befahren wird. Eine Route, über die das Navigationsgerät den Fahrer des Fahrzeugs zu dem Fahrziel führt, kann somit auch auf der Fahrempfehlung basieren. Bei dem Schritt des Ausgebens kann die individuelle Fahrempfehlung an den Fahrer des Fahrzeugs mittels des Navigationsgeräts optisch und/oder akustisch beispielsweise in Form einer Route ausgegeben werden. Eine solche Ausführungsform bietet den Vorteil, dass die Fahrempfehlung bei einer Zielführung mittels des Navigationsgerätes berücksichtigt werden kann. Somit kann die Zielführung verbessert werden.

Die Erfindung wird anhand der beigefügten Zeichnungen beispielhaft näher erläutert. Es zeigen:
- Fig. 1: ein schematisches Blockdiagramm von Vorrichtungen gemäß Ausführungsbeispielen der vorliegenden Erfindung als Teile eines Systems zur Bereitstellung und Bestimmung von Fahrempfehlungen;
- Fig. 2: ein Ablaufdiagramm eines Verfahrens gemäß einem Ausführungsbeispiel der vorliegenden Erfindung; und
- Fig. 3: ein Ablaufdiagramm eines weiteren Verfahrens gemäß einem Ausführungsbeispiel der vorliegenden Erfindung.

Die Figuren der Zeichnungen, deren Beschreibung sowie die Ansprüche enthalten zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Ferner können erfindungsgemäße Verfahrensschritte wiederholt sowie in einer anderen als in der beschriebenen Reihenfolge ausgeführt werden. Umfasst ein Ausführungsbeispiel eine "und/oder"-Verknüpfung zwischen einem ersten Merkmal/Schritt und einem zweiten Merkmal/Schritt, so kann dies so gelesen werden, dass das Ausführungsbeispiel gemäß einer Ausführungsform sowohl das erste Merkmal /den ersten Schritt als auch das zweite Merkmal /den zweiten Schritt und gemäß einer weiteren Ausführungsform entweder nur das erste Merkmal / den ersten Schritt oder nur das zweite Merkmal /den zweiten Schritt aufweist.

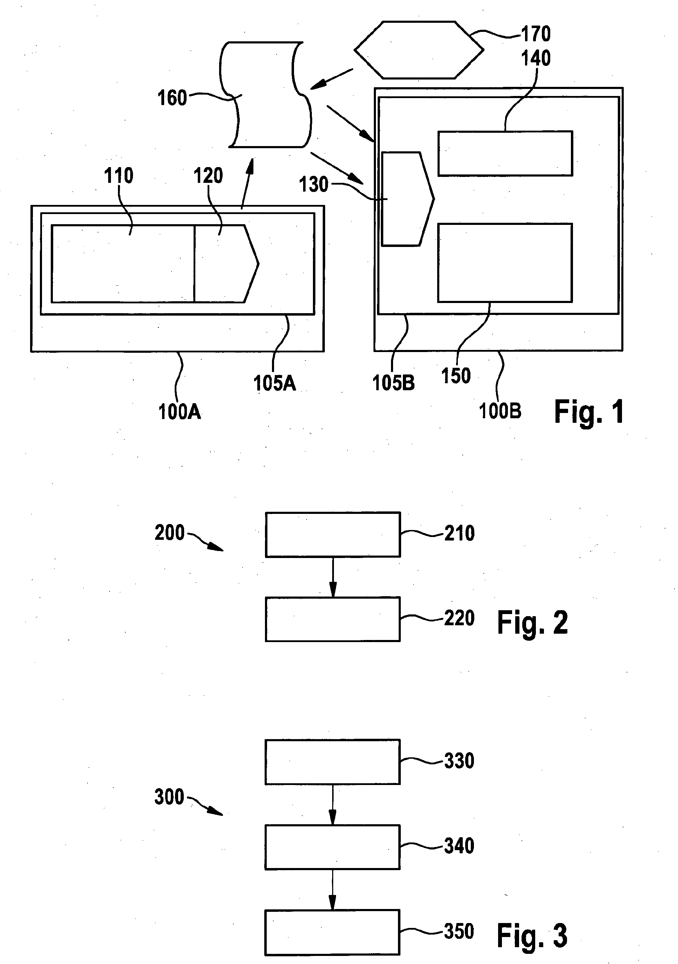

Fig. 1 zeigt ein schematisches Blockdiagramm einer Vorrichtung zum Bestimmen einer Fahrempfehlung für ein Fahrzeug und einer Vorrichtung zum Bereitstellen einer Fahrempfehlung für Fahrzeuge, gemäß Ausführungsbeispielen der vorliegenden Erfindung, als Teile eines Systems zur Bereitstellung und Bestimmung von Fahrempfehlungen. Gezeigt sind ein erstes Fahrzeug 100A, ein zweites Fahrzeug 100B, ein erstes Navigationsgerät 105A, ein zweites Navigationsgerät 105B, eine Einleseeinrichtung 110, eine Aussendeeinrichtung 120, eine Empfangseinrichtung 130, eine Vergleichseinrichtung 140, eine Auswerteeinrichtung 150, eine Social-Media-Internetplattform 160 und eine Bereitstellungseinrichtung 170 für Zusatzinformationen. Das erste Fahrzeug 100A weist das erste Navigationsgerät 105A mit der Einleseeinrichtung 110 und der Aussendeeinrichtung 120 auf. Das zweite Fahrzeug 100B weist das zweite Navigationsgerät 105B mit der Empfangseinrichtung 130, der Vergleichseinrichtung 140 und der Auswerteeinrichtung 150 auf.

Die Einleseeinrichtung 110 kann elektrisch mit einer Eingabeschnittstelle verbunden sein, die als ein Teil des ersten Navigationsgerätes 105A oder als eine mit demselben mittels einer Kommunikationsschnittstelle verbundene Komponente ausgeführt sein kann. Dabei kann die Eingabeschnittstelle ein Tastenfeld und/oder einen Berührungsbildschirm aufweisen. Die Einleseeinrichtung 110 ist ausgebildet, um einer Verkehrsereignisinformation basierend auf einer Benutzereingabe einzulesen. Die Benutzereingabe kann mittels der Kommunikationsschnittstelle erfolgen. Die Einleseeinrichtung 110 kann elektrisch mit der Aussendeeinrichtung 120 verbunden sein und kann ausgebildet sein, um die Verkehrsereignisinformation an die Aussendeeinrichtung 120 auszugeben.

Die Aussendeeinrichtung 120 ist ausgebildet, um die Verkehrsereignisinformation und eine der Verkehrsereignisinformation zugeordnete Positionsinformation, die eine Position des ersten Fahrzeugs 100A zu einem Zeitpunkt des Einlesens der Verkehrsereignisinformation repräsentiert, über eine drahtlose Datenverbindung an die Social-Media-Internetplattform 160 auszusenden, um die Fahrempfehlung bereitzustellen. Dazu kann das erste Navigationsgerät 105A geeignete Kommunikationsmittel aufweisen.

Dabei können die Einleseeinrichtung 110 oder die Aussendeeinrichtung 120 zusätzlich ausgebildet sein, um die Positionsinformation, und gegebenenfalls ein Zeitstempel, zu generieren und/oder der Verkehrsereignisinformation zuzuordnen. Alternativ kann die Positionsinformation auch von einer weiteren Einrichtung des ersten Navigationsgerätes 100A generiert werden.

Die Social-Media-Internetplattform 160 ist ausgebildet, um die Fahrempfehlung in Gestalt der Verkehrsereignisinformation und der zugeordneten Positionsinformation zu empfangen. Die Social-Media-Internetplattform 160 kann insbesondere eine Benutzergruppe aufweisen, die innerhalb der Social-Media-Internetplattform 160 generiert ist. Genau gesagt kann die Aussendeeinrichtung 120 ausgebildet sein, um die Fahrempfehlung an die Benutzergruppe auszusenden. Dazu ist das erste Navigationsgerät 105A als ein Teilnehmergerät der Benutzergruppe angemeldet. An der Benutzergruppe der Social-Media-Internetplattform 160 können mehrere Endgeräte als Teilnehmergeräte angemeldet sein. Die Social-Media-Internetplattform 160 ist ausgebildet, um eine Verteilung der Fahrempfehlung an die Teilnehmergeräte innerhalb der Benutzergruppe zu bewirken. Das zweite Navigationsgerät 105B ist ein Teilnehmergerät der Benutzergruppe.

Die Empfangseinrichtung 130 kann somit ausgebildet sein, um die Verkehrsereignisinformation und die zugeordnete Positionsinformation von der Social-Media-Internetplattform 160 zu empfangen. Dazu kann das zweite Navigationsgerät 105B geeignete Kommunikationsmittel aufweisen. Die Empfangseinrichtung ist ausgebildet, um zumindest die Positionsinformation, die der Verkehrsereignisinformation zugeordnet ist, an die Vergleichseinrichtung 140 auszugeben.

Die Vergleichseinrichtung 140 ist ausgebildet, um zumindest die Positionsinformation, die der Verkehrsereignisinformation zugeordnet ist, von der Empfangseinrichtung 130 zu empfangen. Die Vergleichseinrichtung 140 ist ferner ausgebildet, um die Positionsinformation mit einer Routeninformation, die eine von dem zweiten Fahrzeug 100B zu befahrende Route repräsentiert, zu vergleichen, um zu ermitteln, ob eine von der Positionsinformation repräsentierte Position auf der von dem zweiten Fahrzeug 100B zu befahrenden Route liegt. Die Vergleichseinrichtung 140 kann ausgebildet sein, um basierend auf einem Ergebnis des Vergleichs eine das Ergebnis des Vergleichs repräsentierende Vergleichsinformation zu erzeugen und an die Auswerteeinrichtung 150 auszugeben.

Die Auswerteeinrichtung 150 ist ausgebildet, um die Verkehrsereignisinformation auszuwerten, um die Fahrempfehlung basierend auf der Verkehrsereignisinformation zu bestimmen, wenn die von der Positionsinformation repräsentierte Position auf einer von dem zweiten Fahrzeug 100B zu befahrenden Route liegt. Wenn die von der Positionsinformation repräsentierte Position nicht auf einer von dem zweiten Fahrzeug 100B zu befahrenden Route liegt, kann die Auswerteeinrichtung 150 ausgebildet sein, um die Verkehrsereignisinformation zu verwerfen.

Die Bereitstellungseinrichtung 170 kann bei dem in Fig. 1 gezeigten System optional sein. Dabei kann die Bereitstellungseinrichtung 170 ein Profil, Portal oder dergleichen auf der Social-Media-Internetplattform 160 sein. Die Bereitstellungseinrichtung 170 kann auch der Benutzergruppe zugeordnet sein. Die Bereitstellungseinrichtung 170 kann ausgebildet sein, um Zusatzinformationen an die Social-Media-Internetplattform 160, und insbesondere an die Benutzergruppe, auszugeben. Die Social-Media-Internetplattform 160 ist ausgebildet, um eine Verteilung der Zusatzinformationen an die Teilnehmergeräte innerhalb der Benutzergruppe zu bewirken. Somit kann die Empfangseinrichtung 130 auch ausgebildet sein, und die Zusatzinformationen von der Social-Media-Internetplattform 160 bzw. der Bereitstellungseinrichtung 170 zu empfangen.

Anders ausgedrückt und zusammenfassend gesagt handelt es sich gemäß dem in Fig. 1 gezeigten Ausführungsbeispiel bei dem ersten Navigationsgerät 105A um ein die Fahrempfehlung sendendes Gerät. Die Einleseeinrichtung 110 und die Aussendeeinrichtung 120 generieren auf Veranlassung des Nutzers eine Nachricht bzw. Mail mit der Fahrempfehlung und die Fahrempfehlung wird beispielsweise über die Social-Media-Internetplattform 160, beispielsweise facebook, über ein Benutzerkonto, beispielsweise ein Facebook-Account, des Nutzers als automatisierte Nachricht versandt. Bei der Eingabe des Verkehrsereignisses kann beispielsweise eine Taste oder Tastenkombination an dem ersten Navigationsgerät 105A von dem Nutzer gedrückt werden. Rein beispielhaft können eine Taste 1 für zähfließenden Verkehr, eine Taste 2 für Stop and Go, eine Taste 3 für Stau, eine Taste 4 für eine Sperrung und eine Taste 5 für eine mobile Radarfalle gedrückt werden. Die aktuelle Positionsinformation bzw. Standortinformation des ersten Fahrzeugs 100A wird automatisch generiert. Seitens der Social-Media-Internetplattform 160 erfolgt eine Mailweiterleitung an eine definierte Benutzergruppe, beispielsweise eine Fangruppe einer bestimmten Automobilmarke. Die Bereitstellungseinrichtung 170 kann Zusatzinformationen, z. B. Event-Hinweise durch den Betreiber der Benutzergruppe, bereitstellen. Die Einrichtungen des zweiten Navigationsgerätes 105B als Empfängergerät filtern die Positionsinformation und gegebenenfalls die Zusatzinformationen. Befindet sich das Empfängergerät, d. h. das zweite Navigationsgerät 105B, bzw. verläuft eine Route des zweiten Fahrzeugs 100B außerhalb eines basierend auf der Positionsinformation ermittelten Zielgebiets, lässt das zweite Navigationsgerät 105B die Meldung mit der Fahrinformation unberücksichtigt. Andernfalls erfolgt eine Ausgabe und/oder Verwertung der Warnmeldung bzw. Fahrempfehlung.

Anders ausgedrückt können somit beispielsweise internetfähige Navigationsgeräte 105A einer Benutzergruppe bzw. Fangruppe als Erzeuger und Sender der Fahrempfehlung fungieren und durch aktive Handlung des Nutzers beispielsweise standardisierte Staumeldungen, Meldungen über mobile Radarfallen oder sonstige zielgruppenrelevante Ereignisse über die Social-Media-Anwendungen unter automatischer Hinzufügung der jeweiligen Standortinformation an die definierte Benutzergruppe senden. Dabei kann eine Meldung des Verkehrsereignisses jeweils mit Standort zum Eingabezeitpunkt versehen werden. Die Navigationsgeräte 105B als empfangende Teilnehmergeräte der Nutzer innerhalb der Benutzergruppe empfangen die Meldung mit der Fahrempfehlung. Die Meldung kann dann in Zusammenhang mit der beigefügten Standortmeldung Positionsinformation bzw. ausgewertet werden und es kann eine Warnmeldung ausgegeben werden, wenn die Fahrempfehlung die Route oder das Aufenthaltsgebiet des Empfängers betrifft.

Auch wenn es in Fig. 1 nicht explizit gezeigt ist, kann das erste Navigationsgerät 105A ebenfalls eine Empfangseinrichtung, eine Vergleichseinrichtung und eine Auswerteeinrichtung aufweisen und kann das zweite Navigationsgerät 105B ebenfalls eine Einleseeinrichtung und eine Aussendeeinrichtung aufweisen. Somit können das erste Navigationsgerät 105A und das zweite Navigationsgerät 105B die gleichen Einrichtungen aufweisen. In Fig. 1 ist dies aus Vereinfachungsgründen zeichnerisch nicht dargestellt. Somit sollte auch klar sein, dass der sowohl das erste Navigationsgerät 105A als auch das zweite Navigationsgerät 105B Einrichtungen aufweisen können, die zur Bereitstellung und Bestimmung einer Fahrempfehlung ausgebildet sind.

Fig. 2 zeigt ein Ablaufdiagramm eines Verfahrens 200 zum Bereitstellen einer Fahrempfehlung für ein Fahrzeug, gemäß einem Ausführungsbeispiel der vorliegenden Erfindung. Dabei wird das Verfahren 200 unter Verwendung einer Social-Media-Internetplattform und eines in einem Fahrzeug angeordneten und mit der Social-Media-Internetplattform drahtlos verbundenen, internetfähigen Navigationsgerätes ausgeführt. Bei dem Navigationsgerät kann es sich beispielsweise um das erste Navigationsgerät aus Fig. 1 handeln. Das Verfahren 200 weist einen Schritt des Einlesens 210 einer Verkehrsereignisinformation basierend auf einer Benutzereingabe mittels des Navigationsgerätes auf. Das Verfahren 200 weist auch einen Schritt des Aussendens 220 der Verkehrsereignisinformation und einer der Verkehrsereignisinformation zugeordneten Positionsinformation, die eine Position des Fahrzeugs zu einem Zeitpunkt des Einlesens (210) der Verkehrsereignisinformation repräsentiert, mittels des Navigationsgerätes an die Social-Media-Internetplattform auf, um die Fahrempfehlung bereitzustellen.

Fig. 3 zeigt ein Ablaufdiagramm eines Verfahrens 300 zum Bestimmen einer Fahrempfehlung für ein Fahrzeug, gemäß einem Ausführungsbeispiel der vorliegenden Erfindung. Dabei wird das Verfahren 300 unter Verwendung einer Social-Media-Internetplattform und eines in dem Fahrzeug angeordneten und mit der Social-Media-Internetplattform drahtlos verbundenen, internetfähigen Navigationsgerätes ausgeführt. Bei dem Navigationsgerät kann es sich beispielsweise um das zweite Navigationsgerät aus Fig. 1 handeln. Das Verfahren 300 weist einen Schritt des Empfangens 330 einer Verkehrsereignisinformation und einer der Verkehrsereignisinformation zugeordneten Positionsinformation von der Social-Media-Internetplattform mittels des Navigationsgeräts auf. Auch weist das Verfahren 300 einen Schritt des Vergleichens 340 der Positionsinformation mit einer Routeninformation, die eine von dem Fahrzeug zu befahrende Route repräsentiert, mittels des Navigationsgeräts auf, um zu ermitteln, ob eine von der Positionsinformation repräsentierte Position auf der von dem Fahrzeug zu befahrenden Route liegt. Ferner weist das Verfahren 300 einen Schritt des Auswertens 350 der Verkehrsereignisinformation auf, wenn die von der Positionsinformation repräsentierte Position auf einer von dem Fahrzeug zu befahrenden Route liegt, um die Fahrempfehlung für das Fahrzeug basierend auf der Verkehrsereignisinformation zu bestimmen.

## Patentansprüche

1. Verfahren (300) zum Bestimmen einer Fahrempfehlung für ein Fahrzeug (100B), wobei das Verfahren unter Verwendung einer Social-Media-Internetplattform und eines in dem Fahrzeug (100B) angeordneten und mit der Social-Media-Internetplattform (160) drahtlos verbundenen, internetfähigen Navigationsgerätes (105B) ausgeführt wird, wobei das Verfahren folgende Schritte aufweist:
Empfangen (330) einer Verkehrsereignisinformation und einer der Verkehrsereignisinformation zugeordneten Positionsinformation von der Social-Media-Internetplattform (160) mittels des Navigationsgerätes (105B);
Vergleichen (340) der Positionsinformation mit einer Routeninformation, die eine von dem Fahrzeug (100B) zu befahrende Route repräsentiert, mittels des Navigationsgeräts (105B), um zu ermitteln, ob eine von der Positionsinformation repräsentierte Position auf der von dem Fahrzeug (100B) zu befahrenden Route liegt; und
Auswerten (350) der Verkehrsereignisinformation, wenn die von der Positionsinformation repräsentierte Position auf einer von dem Fahrzeug (100B) zu befahrenden Route liegt, um die Fahrempfehlung für das Fahrzeug (100B) basierend auf der Verkehrsereignisinformation zu bestimmen,
**dadurch gekennzeichnet, dass** im Schritt des Empfangens (330) die Verkehrsereignisinformation ein Verkehrsereignis aus einer vordefinierten Liste von Verkehrsereignissen repräsentiert, wobei die Verkehrsereignisinformation einen von Nutzern der Social-Media-Plattform auf derselben bereitgestellten verkehrsrelevanten Inhalt repräsentiert.

2. Verfahren (200) zum Bereitstellen einer Fahrempfehlung für ein Fahrzeug (100B), wobei das Verfahren unter Verwendung einer Social-Media-Internetplattform (160) und eines in einem Fahrzeug (100A) angeordneten und mit der Social-Media-Internetplattform (160) drahtlos verbundenen, internetfähigen Navigationsgerätes (105A) ausgeführt wird, wobei das Verfahren folgende Schritte aufweist:
Einlesen (210) einer Verkehrsereignisinformation basierend auf einer Benutzereingabe in das Navigationsgerät (105A); und
Aussenden (220) der Verkehrsereignisinformation und einer der Verkehrsereignisinformation zugeordneten Positionsinformation, die eine Position des Fahrzeugs (100A) zu einem Zeitpunkt des Einlesens (210) der Verkehrsereignisinformation repräsentiert, mittels des Navigationsgerätes (105A) an die Social-Media-Internetplattform (160), um die Fahrempfehlung bereitzustellen,
**dadurch gekennzeichnet, dass** im Schritt des Einlesens (210) die Verkehrsereignisinformation ein Verkehrsereignis aus einer vordefinierten Liste von Verkehrsereignissen repräsentiert, wobei die Benutzereingabe eine Auswahlhandlung aus der Liste repräsentiert.

3. Verfahren (200; 300) gemäß einem der vorangegangenen Ansprüche, wobei die Social-Media-Internetplattform (160) zumindest eine Benutzergruppe aufweist, wobei das Navigationsgerät (105A; 105B) ein Teilnehmergerät eines Mitgliedes der zumindest einen Benutzergruppe der Social-Media-Internetplattform (160) ist, **dadurch gekennzeichnet, dass** im Schritt des Empfangens (330) die Verkehrsereignisinformation und die Positionsinformation mittels des Navigationsgeräts (105B) von der zumindest einen Benutzergruppe der Social-Media-Internetplattform (160) empfangen werden oder im Schritt des Aussendens (220) die Verkehrsereignisinformation und die Positionsinformation mittels des Navigationsgerätes (105A) an die zumindest Mitglieder der Benutzergruppe der Social-Media-Internetplattform (160) ausgesendet werden.

4. Verfahren (200; 300) gemäß einem der vorangegangenen Ansprüche, wobei die Social-Media-Internetplattform (160) zumindest eine Benutzergruppe aufweist, wobei das Navigationsgerät ein Teilnehmergerät eines Mitgliedes der zumindest einen Benutzergruppe der Social-Media-Internetplattform (160) ist, wobei zumindest ein weiteres Navigationsgerät zumindest eines weiteren Fahrzeugs ein Teilnehmergerät eines Mitgliedes der zumindest einen Benutzergruppe der Social-Media-Internetplattform (160) ist, **dadurch gekennzeichnet, dass** im Schritt des Empfangens (330) zumindest eine Verkehrsereignisinformation und eine der zumindest einen Verkehrsereignisinformation zugeordnete Positionsinformation, die von dem zumindest einen weiteren Navigationsgerät des Mitgliedes der zumindest einen Benutzergruppe stammen, mittels des Navigationsgeräts von der zumindest einen Benutzergruppe der Social-Media-Internetplattform (160) empfangen werden oder im Schritt des Aussendens (220) die Verkehrsereignisinformation und die Positionsinformation mittels des Navigationsgerätes an zumindest weitere Mitglieder zumindest eine Benutzergruppe der Social-Media-Internetplattform (160) ausgesendet werden, wobei die Verkehrsereignisinformation und die Positionsinformation für das zumindest eine weitere Navigationsgerät der zumindest einen Benutzergruppe empfangbar sind.

5. Verfahren (200; 300) gemäß einem der vorangegangenen Ansprüche, **gekennzeichnet durch** einen Schritt des Überprüfens der Verkehrsereignisinformation und der Positionsinformation auf Plausibilität unter Verwendung von Fahrtdaten des Fahrzeugs (100A; 100B), Verkehrsinformationen oder einer Anzahl von gleichen oder inhaltlich verwandten Verkehrsereignisinformationen mit innerhalb eines Toleranzbereichs gleichen Positionsinformationen.

6. Verfahren (200; 300) gemäß Anspruch 5, **gekennzeichnet durch** einen Schritt des Verwerfens der Verkehrsereignisinformation, wenn im Schritt des Überprüfens keine Plausibilität der Verkehrsereignisinformation und der Positionsinformation festgestellt wird.

7. Verfahren (200; 300) gemäß einem der Ansprüche 1 oder 3 bis 6, **gekennzeichnet durch** einen Schritt des Modifizierens einer mittels des Navigationsgerätes (105B) bestimmten, bestehenden Route basierend auf der Fahrempfehlung, um eine modifizierte Route zu erzeugen, und einen Schritt des Ausgebens der modifizierten Route an eine Benutzerschnittstelle des Navigationsgerätes (105B).

8. Vorrichtung, die Einrichtungen zur Durchführung eines der Verfahren (200, 300) nach einem der vorangegangenen Ansprüche aufweist.

9. Computerprogrammprodukt mit Programmcode, der auf einem maschinenlesbaren Träger gespeichert ist, zur Durchführung eines der Verfahren (200, 300) nach einem der vorangegangenen Ansprüche, wenn das Programm auf einer Vorrichtung ausgeführt wird.

## Claims

1. Method (300) for determining a driving recommendation for a vehicle (100B), wherein the method is carried out using a social media Internet platform and an Internet-compatible navigation appliance (105B) that is arranged in the vehicle (100B) and wirelessly connected to the social media Internet platform (160), wherein the method has the following steps:
reception (330) of a traffic event information item and a position information item, associated with the traffic event information item, from the social media Internet platform (160) by means of a navigation appliance (105B);
comparison (340) of the position information item with a route information item, which represents a route to be taken by the vehicle (100B), by means of the navigation appliance (105B) in order to ascertain whether a position represented by the position information item is on the route to be taken by the vehicle (100B); and
evaluation (350) of the traffic event information item when the position represented by the position information item is on a route to be taken by the vehicle (100B) in order determine the driving recommendation for the vehicle (100B) on the basis of the traffic event information item,
**characterized in that** in the step of reception (330) the traffic event information item represents a traffic event from a predefined list of traffic events, wherein the traffic event information item represents a traffic-relevant content provided by users of the social media platform on same.

2. Method (200) for providing a driving recommendation for a vehicle (100B), wherein the method is carried out using a social media Internet platform (160) and an Internet-compatible navigation appliance (105A) that is arranged in a vehicle (100A) and wirelessly connected to the social media Internet platform (160), wherein the method has the following steps:
reading-in (210) of a traffic event information item on the basis of a user input into the navigation appliance (105A); and
transmission (220) of the traffic event information item and a position information item, which is associated with the traffic event information item and which represents a position of the vehicle (100A) at an instant at which the traffic event information item is read in (210), by means of the navigation appliance (105A) to the social media Internet platform (160) in order to provide the driving recommendation,
**characterized in that** in the step of reading-in (210) the traffic event information item represents a traffic event from a predefined list of traffic events, wherein the user input represents a selection action from the list.

3. Method (200; 300) according to either of the preceding claims, wherein the social media Internet platform (160) has at least one user group, wherein the navigation appliance (105A; 105B) is a subscriber appliance of a member of the at least one user group of the social media Internet platform (160), **characterized in that** in the step of reception (330) the traffic event information item and the position information item are received by means of the navigation appliance (105B) from the at least one user group of the social media Internet platform (160) or in a step of transmission (220) the traffic event information item and the position information item are transmitted by means of the navigation appliance (105A) to the members of the user group of the social media Internet platform (160).

4. Method (200; 300) according to one of the preceding claims, wherein the social media Internet platform (160) has at least one user group, wherein the navigation appliance is a subscriber appliance of a member of the at least one user group of the social media Internet platform (160), wherein at least one further navigation appliance of at least one further vehicle is a subscriber appliance of a member of the at least one user group of the social media Internet platform (160), **characterized in that** in the step of reception (330) at least one traffic event information item and a position information item, associated with the at least one traffic event information item, which come from the at least one further navigation appliance of the member of the at least one user group, are received by means of the navigation appliance from the at least one user group of the social media Internet platform (160) or in the step of transmission (220) the traffic event information item and the position information item are transmitted by means of the navigation appliance to at least further members of at least one user group of the social media Internet platform (160), wherein the traffic event information item and the position information item can be received by the at least one further navigation appliance of the at least one user group.

5. Method (200; 300) according to one of the preceding claims, **characterized by** a step of checking of the traffic event information item and the position information item for plausibility using journey data from the vehicle (100A; 100B), traffic information items or a number of identical or related-content traffic event information items with position information items that are identical within a tolerance range.

6. Method (200; 300) according to Claim 5, **characterized by** a step of rejection of the traffic event information item if plausibility of the traffic event information item and the position information item is not found in the checking step.

7. Method (200; 300) according to one of Claims 1 or 3 to 6,
**characterized by** a step of modification of an existing route, determined by means of the navigation appliance (105B), on the basis of the driving recommendation in order to produce a modified route, and a step of output of the modified route to a user interface of the navigation appliance (105B).

8. Apparatus that has devices for performing one of the methods (200, 300) according to one of the preceding claims.

9. Computer program product having program code, which is stored on a machine-readable medium, for performing one of the methods (200, 300) according to one of the preceding claims when the program is executed on an apparatus.

## Revendications

1. Procédé (300) destiné à déterminer une recommandation de conduite pour un véhicule (100B), dans lequel le procédé est mis en oeuvre par utilisation d'une plate-forme Internet multimédia sociale et d'un appareil de navigation (105B) compatible avec l'Internet disposé dans le véhicule (100B) et connecté sans fil à la plate-forme Internet multimédia sociale (160), dans lequel le procédé comprend les étapes consistant à :
recevoir (330) une information concernant un événement de circulation et une information de position associée à l'information concernant un événement de circulation en provenance de la plate-forme Internet multimédia sociale (160) au moyen de l'appareil de navigation (105B) ;
comparer (340) l'information de position à une information d'itinéraire qui représente un itinéraire devant être parcouru par le véhicule (100B), au moyen de l'appareil de navigation (105B), afin de déterminer si une position représentée par l'information de position se situe sur l'itinéraire devant être parcouru par le véhicule (100B) ; et
évaluer (350) l'information concernant un événement de circulation lorsque la position représentée par l'information de position se situe sur l'itinéraire devant être parcouru par le véhicule (100B) afin de déterminer la recommandation de conduite pour le véhicule (100B) sur la base de l'information concernant un événement de circulation,
**caractérisé en ce que**, lors de l'étape de réception (330), l'information concernant un événement de circulation représente un événement de circulation provenant d'une liste prédéfinie d'événements de circulation, dans lequel l'information concernant un événement de circulation représente un contenu pertinent du point de vue de la circulation et fourni par des utilisateurs de la plate-forme multimédia sociale sur celle-ci.

2. Procédé (200) destiné à fournir une recommandation de conduite pour un véhicule (100B), dans lequel le procédé est mis en oeuvre par utilisation d'une plate-forme Internet multimédia sociale (160) et d'un appareil de navigation (105A) compatible avec l'Internet disposé dans un véhicule (100A) et connecté sans fil à la plate-forme Internet multimédia sociale (160), dans lequel le procédé consiste à :
lire en entrée (210) une information concernant un événement de circulation sur la base d'une entrée de l'utilisateur dans l'appareil de navigation (105A) ; et
envoyer (220) l'information concernant un événement de circulation et une information de position associée à l'information concernant un événement de circulation qui représente une position du véhicule (100A) à un instant de la lecture en entrée (210) de l'information concernant un événement de circulation, au moyen de l'appareil de navigation (105A), à la plate-forme Internet multimédia sociale (160) afin de fournir la recommandation de conduite,
**caractérisé en ce que**, lors de l'étape de lecture en entrée (210), l'information concernant un événement de circulation représente un événement de circulation provenant d'une liste prédéfinie d'événements de circulation, dans lequel l'entrée de l'utilisateur représente une action de sélection dans la liste.

3. Procédé (200 ; 300) selon l'une quelconque des revendications précédentes, dans lequel la plate-forme Internet multimédia sociale (160) comprend au moins un groupe d'utilisateurs, dans lequel l'appareil de navigation (105A ; 105B) est un appareil d'abonné d'un membre de l'au moins un groupe d'utilisateurs de la plate-forme Internet multimédia sociale (160), **caractérisé en ce que**, lors de l'étape de réception (330), l'information concernant un événement de circulation et l'information de position sont reçues au moyen de l'appareil de navigation (105B) par l'au moins un groupe d'utilisateurs de la plate-forme Internet multimédia sociale (160) ou **en ce que**, lors de l'étape d'envoi (220), l'information concernant un événement de circulation et l'information de position sont envoyées au moyen de l'appareil de navigation (105A) aux membres du groupe d'utilisateurs de la plate-forme Internet multimédia sociale (160).

4. Procédé (200 ; 300) selon l'une quelconque des revendications précédentes, dans lequel la plate-forme Internet multimédia sociale (160) comprend au moins un groupe d'utilisateurs, dans lequel l'appareil de navigation est un appareil d'abonné d'un membre de l'au moins un groupe d'utilisateurs de la plate-forme Internet multimédia sociale (160), dans lequel au moins un autre appareil de navigation d'au moins un autre véhicule est un appareil d'abonné d'un membre de l'au moins un groupe d'utilisateurs de la plate-forme Internet multimédia sociale (160), **caractérisé en ce que**, lors de l'étape de réception (330), au moins une information concernant un événement de circulation et une information de position associée à l'au moins une information concernant un événement de circulation, qui proviennent de l'au moins un autre appareil de navigation du membre de l'au moins un groupe d'utilisateurs, sont reçues au moyen de l'appareil de navigation par l'au moins un groupe d'utilisateurs de la plate-forme Internet multimédia sociale (160) ou **en ce que**, lors de l'étape d'envoi (220), l'information concernant un événement de circulation et l'information de position sont envoyées au moyen de l'appareil de navigation à l'au moins un autre membre de l'au moins un groupe d'utilisateurs de la plate-forme Internet multimédia sociale (160), dans lequel l'information concernant un événement de circulation et l'information de position peuvent être reçues par l'au moins un autre appareil de navigation de l'au moins un groupe d'utilisateurs.

5. Procédé (200 ; 300) selon l'une quelconque des revendications précédentes, **caractérisé par** une étape consistant à vérifier l'information concernant un événement de circulation et l'information de position en ce qui concerne leur plausibilité par utilisation de données de trajets du véhicule (100A ; 100B), d'informations de circulation ou d'un certain nombre d'informations concernant des événements de circulation identiques ou dont les contenus sont apparentés avec des informations de position identiques à un intervalle de tolérance près.

6. Procédé (200 ; 300) selon la revendication 5, **caractérisé par** une étape consistant à rejeter l'information concernant un événement de circulation lorsque, lors de l'étape de vérification, aucune plausibilité de l'information concernant un événement de circulation et l'information de position n'est établie.

7. Procédé (200 ; 300) selon l'une quelconque des revendications 1 ou 3 à 6, **caractérisé par** une étape consistant à modifier un itinéraire existant, déterminé au moyen de l'appareil de navigation (105B), sur la base de la recommandation de conduite, afin de générer un itinéraire modifié, et par une étape consistant à délivrer l'itinéraire modifié à une interface utilisateur de l'appareil de navigation (105B).

8. Dispositif comprenant des moyens destinés à mettre en oeuvre l'un des procédés (200, 300) selon l'une quelconque des revendications précédentes.

9. Produit de programme informatique comprenant un code de programme qui est stocké sur un support lisible par machine, destiné à mettre en oeuvre l'un des procédés (200, 300) selon l'une quelconque des revendications précédentes, lorsque le programme est exécuté sur un dispositif.
